# DEMANDE DE BREVET EUROPEEN

(11) **EP 1 739 363 A1**
(43) Date de publication de la demande: **03.01.2007**
(21) Numéro de dépôt: 06356079.1
(22) Date de dépôt: 28.06.2006
(51) Int. Cl.: F24C 15/32, A21B 3/04

(54) **Dispositif d'évaporation d'eau pour four**

(30) Priorité: 01.07.2005 FR 0507013
(71) Demandeur: SEB SA, 69130 Ecully (FR)
(72) Inventeur: Valance, Nicolas, 88000 Epinal (FR); Antoine, Eric, 88370 Bellefontaine (FR); Wilhelm, Patrick, 88200 Dommartin les Remiremont (FR)
(74) Mandataire: Kiehl, Hubert

(57) **Abrégé**

La présente invention concerne un dispositif de remplissage (5) d'un plateau évaporateur (1) disposé dans un four électroménager, caractérisé en ce qu'il comporte un réservoir de remplissage (8) mobile entre une position repliée où le réservoir de remplissage (8) est essentiellement disposé au dessus du plateau évaporateur (1), et une position ouverte ou le réservoir de remplissage (8) est essentiellement disposé hors du plateau évaporateur (1), pour l'approvisionnement en eau dudit plateau évaporateur (1).

## Description

L'invention concerne un four électroménager pourvu d'un plateau évaporateur d'eau.

Les fours électroménagers fonctionnant sur le principe d'une production de chaleur au moyen de résistances chauffantes disposées au niveau de la voûte et de la sole du four sont désormais classiques et connus depuis longtemps. Ces appareils disposent de réglages multiples permettant le chauffage des aliments par le dessus ou par le dessous indépendamment ou en combinaison et il est connu d'intégrer dans l'ensemble un système de circulation d'air de manière à homogénéiser la température et à répartir le chauffage dans le volume.

Les résistances chauffantes peuvent fonctionner pour cuire, griller ou simplement réchauffer les aliments de façon satisfaisante. Toutefois il se trouve de nombreuses situations où la chaleur importante nécessaire à la cuisson dessèche les aliments et en modifie la texture, les rendant peu appétissants, voire difficiles à manger.

La chaleur sèche développée par les fours traditionnels provoque une fusion rapide des graisses superficielles des aliments alors que le coeur de l'aliment n'est pas atteint, le gradient de température entre l'intérieur et l'extérieur de l'aliment est trop important ce qui induit une cuisson hétérogène et dans certains cas une perte de tendreté des viandes. Il arrive aussi occasionnellement que la peau soit carbonisée alors que l'intérieur n'est pas cuit.

La dessiccation pose problème notamment lorsqu'il s'agit de réchauffer des aliments déjà cuits, de cuire pendant un temps assez long des viandes au tournebroche, de chauffer des gratins, du riz et des aliments nécessitant une teneur en eau élevée ou encore cuire des poissons. Dans ces situations, et dans de nombreuses autres, le four traditionnel diminue de façon excessive la teneur en eau des aliments.

Pour tenter de résoudre ce problème de perte d'humidité à la cuisson il est classiquement connu de verser de l'eau dans la sole, qui joue alors le rôle d'un évaporateur, pour créer une teneur en vapeur à l'intérieur du four, cette solution a été proposée notamment dans le document US 4 810 856.

Ce moyen permet effectivement de réduire la perte en eau des aliments et favorise une cuisson plus rapide et plus homogène des aliments. Toutefois ce dispositif présente plusieurs inconvénients notables, notamment le jus de cuisson des aliments se mélange avec l'eau d'évaporation dans la sole et rend celui-ci inutilisable pour des sauces, par ailleurs le gras brûlant provoque en tombant dans l'eau des projections, lesquelles projections peuvent être dangereuses pour le cuisinier lorsqu'il réapprovisionne le four en eau d'évaporation.

De plus ledit réapprovisionnement en eau d'évaporation nécessite l'ouverture complète du four ce qui entraîne une chute brutale de la température préjudiciable à la cuisson, en plus des risques de brûlure.

Un autre inconvénient lié au remplissage de la sole en eau est la déstabilisation de la régulation de la température du four car celle-ci est généralement disposée à ce niveau. La présence d'eau sur la sole et le remplissage en eau en cours de cuisson perturbent fortement la mesure de température qui entraîne une réaction erronée de la régulation.

Dans les dispositifs existants on ne trouve pas de moyen simple permettant le remplissage en eau de l'évaporateur, généralement ce remplissage est effectué soit en tirant un plateau amovible, ce qui engendre des vagues de liquide à la surface de l'évaporateur et un fort risque de débordement et de brûlure pour l'utilisateur, soit en ajoutant l'eau directement dans la sole avec obligation d'introduire la main dans le four pour le remplissage, et donc un risque également important d'accident.

L'invention a pour objectif de résoudre les principales difficultés énoncées précédemment en proposant un dispositif de remplissage adapté pour l'approvisionnement en eau d'un évaporateur disposé dans l'enceinte d'un four électroménager.

La présente invention concerne un dispositif de remplissage d'un plateau évaporateur disposé dans un four électroménager, caractérisé en ce qu'il comporte un réservoir de remplissage mobile entre une position repliée où le réservoir de remplissage est essentiellement disposé au dessus du plateau évaporateur, et une position ouverte ou le réservoir de remplissage est essentiellement disposé hors du plateau évaporateur, pour l'approvisionnement en eau dudit plateau évaporateur.

Les avantages liés à une cuisson en chaleur humide avec un évaporateur positionné dans un four sont multiples, les problèmes de dessiccation des aliments sont favorablement résolus, la cuisson est plus homogène et plus rapide du fait de la meilleure conduction thermique de la vapeur. Les aliments sont cuits à coeur sans que la périphérie soit dégradée par une température excessive.

Les préparations culinaires basées sur les pâtes, le riz, les légumes et autres aliments à forte teneur en eau cuisent ou sont réchauffées sans perte d'humidité préjudiciable à leur texture et sans perte de saveur.

Dans un mode préféré de mise en oeuvre de l'invention, le plateau évaporateur est placé sous la voûte du four. Par rapport à l'art antérieur connu et notamment comparativement à l'utilisation de la sole comme réceptacle d'eau la disposition de l'évaporateur sous la voûte du four est particulièrement favorable pour plusieurs aspects, notamment l'aspect sécurité, puisqu'il n'est pas nécessaire d'ouvrir complètement le four pour remplir d'eau l'évaporateur. Les utilisateurs sont ainsi protégés des projections éventuelles et ne sont pas exposés à la forte chaleur du four. De plus la sole du four est pleinement utilisable pour la récupération des jus de cuisson.

La présente invention trouve cependant également son application dans les dispositifs d'évaporation d'eau disposés en partie basse du four.

Selon une première variante de réalisation, le réservoir de remplissage est mobile en translation ou en rotation par rapport au plateau évaporateur.

Alternativement, et de façon préférée, le réservoir de remplissage est articulé autour d'un axe sensiblement vertical et permettant le pivotement dudit réservoir de remplissage entre la position repliée et la position ouverte.

Le dispositif de remplissage en eau de l'évaporateur, objet de la présente demande, permet ainsi aux utilisateurs d'approvisionner en liquide l'évaporateur sans risque de brûlures, de façon sécurisée, et sans mise en mouvement du plateau évaporateur qui pourrait créer des vagues et donc projeter de l'eau bouillante sur l'utilisateur.

Un avantage déterminant du dispositif de remplissage est qu'il permet d'approvisionner en liquide le plateau évaporateur sans qu'il soit nécessaire d'ouvrir complètement la porte du four et donc de faire chuter sa température, et même, dans certaines variantes dans lesquelles une ouverture est aménagée dans la porte du four ou sur son pourtour, d'ouvrir la porte.

D'autres caractéristiques et avantages de l'invention se dégageront de la description qui va suivre en regard des dessins annexés qui ne sont donnés qu'à titre d'exemples non limitatifs.

La figure 1 est une vue de dessus en perspective d'un four électroménager contenant un dispositif de remplissage selon l'invention.

La figure 2 est une vue du four dans laquelle la porte a été enlevée présentant le dispositif de remplissage en position ouverte et en vue de dessous.

La figure 3 est une vue de dessus en perspective d'un plateau évaporateur et du dispositif de remplissage selon l'invention.

La figure 4 est une vue éclatée du dispositif de remplissage montrant ses composantes essentielles.

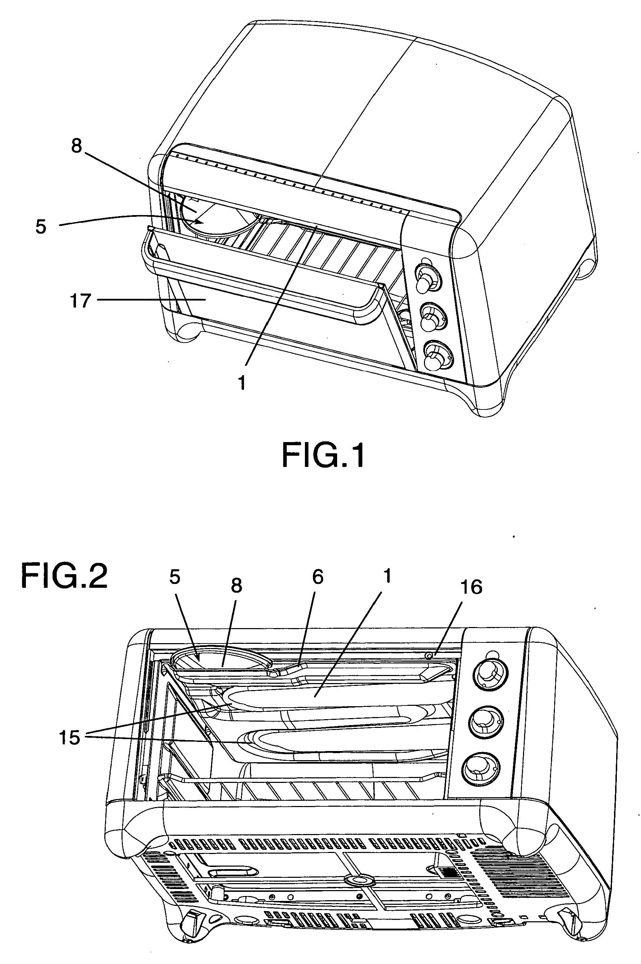

La figure 1 présente le positionnement du dispositif de remplissage 5 du plateau évaporateur 1 par rapport à la porte du four 17.

Les figures 1 et 2 montrent le four électroménager contenant un dispositif de remplissage 5 selon un exemple avantageux de réalisation de l'invention, Ledit four électroménager possède un plateau évaporateur 1 positionné entre la résistance chauffante de voûte 15 et la voûte 16 du four, soit donc dans la partie supérieure de l'appareil.

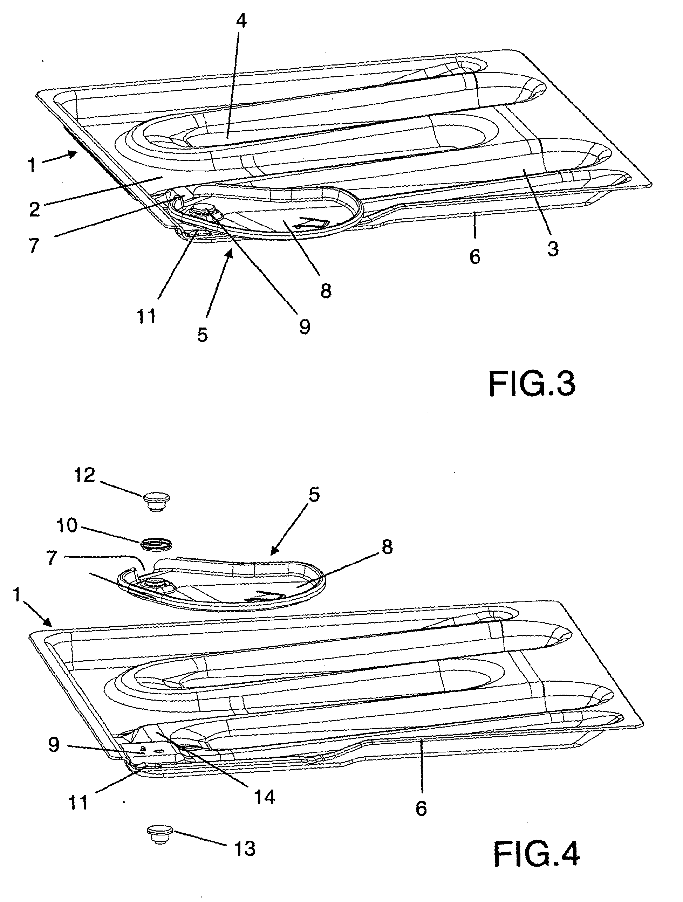

Le plateau évaporateur 1 illustré sur les figures 3 et 4 comporte au moins une zone en dépression 2, 3, 4, servant de réceptacle pour l'eau d'évaporation.

De préférence l'évaporateur comporte au moins une zone en dépression conformée de manière à utiliser au moins un espace laissé libre par la résistance de voûte 15 sous-jacente.

Par rapport à l'horizontale et positionné dans le four, ledit plateau évaporateur 1 comporte de préférence plusieurs zones en dépression 2, 3 et 4 pouvant éventuellement communiquer entre elles.

De façon préférée selon l'invention le plateau évaporateur est formé par emboutissage d'une plaque métallique, tel l'aluminium, de manière à créer un relief épousant la forme de la résistance chauffante de voûte 15.

Lorsque l'évaporateur est positionné dans le four électroménager la résistance chauffante de voûte 15 en forme de serpentin est située sous les parties en relief qui délimitent les zones en dépression 2, 3 et 4.

Pour des fours de faible capacité, c'est-à-dire de 15 et 20 litres, la quantité d'eau pouvant être introduite dans l'évaporateur est d'au moins 50 ml et de préférence plus de 100 ml. Pour des fours de volumes plus importants l'évaporateur est conformé pour recevoir une plus grosse quantité de liquide.

Selon l'invention l'eau d'évaporation est amenée dans l'évaporateur au moyen d'un dispositif de remplissage 5.

Tel que bien visible sur la figure 3, le dispositif de remplissage 5 est disposé sur le plateau évaporateur, en présentant une ouverture d'écoulement de l'eau vers le plateau.

Le positionnement du dispositif de remplissage sur le plateau évaporateur 1 limite les risques de fuite ou de débordement lors de l'approvisionnement en eau du plateau évaporateur.

Le dispositif de remplissage 5 est de préférence situé proche d'un angle ou sur le côté avant 6 de l'évaporateur, c'est à dire sur l'avant du four électroménager, tel que cela est illustré sur les figures 1 et 2, à proximité de la porte du four 17.

Selon une variante préférée de l'invention illustrée sur les figures 3 et 4, le dispositif de remplissage 5 comporte un réservoir 8 plat ou avec un fond très légèrement conique et incliné vers l'intérieur du plateau évaporateur, réalisant, en quelque sorte, un entonnoir pour le remplissage du plateau évaporateur.
Ledit réservoir 8 dispose d'une ouverture 7 pour l'écoulement de l'eau vers les zones en dépression 2 et 3.

Le réservoir de remplissage 8 est articulé en rotation autour d'un axe 9 permettant son pivotement entre une position ouverte pour le remplissage de l'évaporateur et une position repliée lorsque le four est en fonctionnement.

La position repliée est obtenue par pivotement du réservoir de remplissage 8 autour de l'axe 9 vers l'intérieur du four.

Avantageusement, le dispositif de remplissage 5 comporte un système de repliement automatique du réservoir de remplissage 8 au-dessus du plateau évaporateur 1.

Selon un mode préféré de réalisation, le dispositif de remplissage pivote autour d'un axe 9 autour duquel est placé un ressort de rappel 10, dont l'agencement dans l'évaporateur est illustré sur la figure 4.

D'autres dispositifs de repliement automatiques peuvent être mis en oeuvre en étant liés à la porte du four ou à l'aide d'un moteur.

Selon l'invention le réservoir de remplissage 8 peut pivoter autour de l'axe 9 selon différents angles. Le réservoir peut pivoter d'un angle d'au moins 10° et de préférence d'un angle supérieur à 20°.

Lorsque l'utilisateur souhaite remplir en eau le plateau évaporateur 1 il entrouvre la porte du four, le ressort de rappel 10 permet alors la sortie automatique du dispositif de remplissage 5 jusqu'à une position verrouillée, la quantité de liquide nécessaire est alors ajoutée. La fermeture de la porte du four replie automatiquement le dispositif de remplissage.

Afin de verrouiller le réservoir de remplissage 8 en position ouverte, ou au moins limiter le mouvement d'ouverture du réservoir, un bossage 11 est réalisé sur le côté avant 6 du plateau évaporateur. Lorsque le réservoir de remplissage est en position ouverte le bossage 11 provoque une pression sur l'axe de rotation du réservoir de remplissage qui bloque l'action du ressort de rappel 10.

Divers autres systèmes de blocage du réservoir de remplissage 8 en position ouverte de remplissage sont envisageables sans sortir du cadre de l'invention.

Le ressort de rappel 10 est maintenu dans un logement aménagé autour de l'axe de rotation 9 du dispositif de remplissage au moyen de rivets 12, 13, ou d'obturateurs adaptés.

Lorsque le réservoir de remplissage 8 est en position ouverte et que de l'eau est versée l'écoulement s'effectue par l'ouverture 7 et se déverse sur le plateau évaporateur 1, de préférence sur un répartiteur 14 situé sous l'ouverture 7 et permettant le remplissage des zones en dépression 2 et 3.

Le volume du réservoir 8 est défini en fonction de la capacité du plateau évaporateur, ledit volume est de préférence marqué dans le fond du réservoir ou/et sur son rebord dans l'éventualité d'un rebord plat.

Pour limiter l'encombrement en hauteur du plateau évaporateur comportant un dispositif de remplissage selon l'invention le réservoir de remplissage 8 est donc configuré avec une hauteur aussi réduite que possible.

Afin que la quantité de liquide d'évaporation puisse être rapidement ajoutée la surface dudit réservoir est donc choisie délibérément assez grande.

La hauteur du réservoir de remplissage 8 est inférieure à 10 cm et de préférence inférieure à 5 cm.

Pour des fours de petite capacité, typiquement de 15 à 20 litres de volume utile, le plateau évaporateur est prévu pour recevoir une quantité d'eau de l'ordre de 100 à 500 ml, distribuable par le dispositif selon l'invention.

Le réservoir de remplissage 8 permet l'approvisionnement en eau de l'évaporateur, pour que cet approvisionnement soit aussi rapide que possible le volume du réservoir doit être suffisamment important, pour un évaporateur pouvant contenir de 100 à 500 ml, le réservoir de remplissage 8 dispose d'une capacité d'au moins 10 ml et de préférence plus de 20 ml.

De préférence selon l'invention, et pour des raisons économiques, le réservoir de remplissage est amené en position ouverte après ouverture partielle de la porte du four, il peut cependant être envisagé que le réservoir de remplissage puisse se déplier dans une fenêtre aménagée, soit dans la porte du four 17, soit dans la paroi de façade au-dessus de la porte, soit dans l'une des parois latérales du four, de manière à éviter l'ouverture de la porte du four et la chute de température en résultant.

Dans cette variante le dispositif de remplissage peut fonctionner de manière identique, c'est à dire sous l'action de l'utilisateur, ou être relié au mécanisme d'ouverture de la fenêtre, notamment lorsque celle ci est pratiquée dans la paroi de façade, afin que le réservoir de remplissage soit déployé automatiquement lorsque ladite fenêtre est ouverte.

Il existe également d'autres variantes dans lesquelles le dispositif de remplissage peut être configuré pour que le réservoir se déploie automatiquement, par exemple sous l'action d'un ressort, et pouvant éventuellement comporter un moyen de verrouillage en position fermée. La position verrouillée étant déterminée par l'utilisateur lui-même.

Diverses formes peuvent être imaginées pour le réservoir de remplissage, et l'ouverture permettant la distribution de l'eau sur l'évaporateur peut être plus ou moins large, sans sortir du cadre de l'invention.

Il est également envisageable, dans le cadre de l'invention, de disposer le réservoir de remplissage sur le côté du four, pour des raisons techniques de praticité et de commodité d'emploi.

Il pourra également être envisagé de disposer d'une indication du niveau d'eau restant dans le plateau évaporateur, par une mesure directe ou indirecte de ce niveau, par tout moyen adapté. Une extension du plateau évaporateur sur l'un des côtés du four, avec une dépression en liaison avec la partie basse des zones 2 et 3, par exemple, pourrait permettre d'indiquer à l'utilisateur, à l'aide d'une fenêtre de visualisation translucide ou transparente, le niveau d'eau restant dans les zones en dépression.

Bien entendu, l'invention n'est pas limitée aux modes de réalisation décrits et représentés à titre d'exemples, mais elle comprend aussi tous les équivalents techniques ainsi que leurs combinaisons.

## Revendications

1. Dispositif de remplissage (5) d'un plateau évaporateur (1) disposé dans un four électroménager, **caractérisé en ce qu'**il comporte un réservoir de remplissage (8) mobile entre une position repliée où le réservoir de remplissage (8) est essentiellement disposé au dessus du plateau évaporateur (1), et une position ouverte ou le réservoir de remplissage (8) est essentiellement disposé hors du plateau évaporateur (1), pour l'approvisionnement en eau dudit plateau évaporateur (1).

2. Dispositif de remplissage (5) d'un plateau évaporateur (1) selon la revendication 1, **caractérisé en ce que** le dispositif de remplissage (5) est positionné sur le plateau évaporateur (1).

3. Dispositif de remplissage (5) d'un plateau évaporateur (1) selon l'une des revendications précédentes, **caractérisé en ce que** le réservoir de remplissage (8) est mobile en translation ou en rotation par rapport au plateau évaporateur.

4. Dispositif de remplissage (5) d'un plateau évaporateur (1) selon l'une des revendications 1 ou 2, **caractérisé en ce que** le réservoir de remplissage (8) est articulé autour d'un axe (9) sensiblement vertical et permettant le pivotement dudit réservoir de remplissage (8) entre la position repliée et la position ouverte.

5. Dispositif de remplissage (5) d'un plateau évaporateur (1) selon l'une des revendications précédentes, **caractérisé en ce que** le réservoir est positionné sur la partie avant (6) dudit plateau évaporateur (1) et de préférence proche d'un angle.

6. Dispositif de remplissage (5) d'un plateau évaporateur selon l'une des revendications 1 à 5, **caractérisé en ce qu'**il comporte un système de repliement automatique du réservoir de remplissage (8) au-dessus du plateau évaporateur (1).

7. Dispositif de remplissage (5) d'un plateau évaporateur (1) selon l'une quelconque des revendications précédentes, **caractérisé en ce que** le réservoir de remplissage (8) dispose d'une capacité d'au moins 10 ml et de préférence plus de 20 ml.

8. Dispositif de remplissage (5) d'un plateau évaporateur (1) selon l'une quelconque des revendications précédentes, **caractérisé en ce que** le réservoir de remplissage (8) dispose d'une hauteur réduite et d'une surface importante.

9. Dispositif de remplissage (5) d'un plateau évaporateur (1) selon la revendication 8, **caractérisé en ce que** la hauteur du réservoir de remplissage (8) est inférieure à 10 cm et de préférence inférieure à 5 cm.

10. Dispositif de remplissage (5) d'un plateau évaporateur (1) selon la revendication 2 dans lequel le réservoir de remplissage (8) comporte une ouverture (7) pour l'écoulement de l'eau sur le plateau évaporateur.

11. Dispositif de remplissage (5) d'un plateau évaporateur (1) selon la revendication précédente, **caractérisé en ce que** l'ouverture (7) est positionnée au-dessus d'un répartiteur de liquide (14) lorsque le réservoir de remplissage (8) est en position ouverte pour l'approvisionnement en eau de l'évaporateur (1).

12. Dispositif de remplissage (5) d'un plateau évaporateur (1) selon la revendication 1 **caractérisé en ce qu'**il comporte un système de blocage de la position ouverte du réservoir de remplissage (8).

13. Four électroménager comprenant notamment une porte ainsi qu'un plateau évaporateur (1) muni d'un dispositif de son remplissage (5) selon l'une des revendications 6 à 12, dans lequel le dépliement s'effectue sous l'action d'un ressort de rappel (10) à l'entrouverture de la porte, et le repliement sous l'action de la fermeture de la porte.

14. Four électroménager selon la revendication précédente, **caractérisé en ce que** le réservoir de remplissage (8) peut se déplier dans une fenêtre aménagée, soit dans la porte du four (17), soit dans la paroi de façade au-dessus de la porte, soit dans l'une des parois latérales du four.
